Europäisches Patentamt

European Patent Office

Office européen des brevets

(19)

(11) Publication number: **0 175 340 B1**

# (12) EUROPEAN PATENT SPECIFICATION

(45) Date of publication of patent specification: **12.06.91**   (51) Int. Cl.⁵: **G09G 1/28**

(21) Application number: **85111731.7**

(22) Date of filing: **17.09.85**

(54) **A computer display system for producing color text and graphics.**

(30) Priority: **17.09.84 US 650941**

(43) Date of publication of application:
**26.03.86 Bulletin 86/13**

(45) Publication of the grant of the patent:
**12.06.91 Bulletin 91/24**

(84) Designated Contracting States:
**CH DE FR GB IT LI NL SE**

(56) References cited:
**EP-A- 0 108 516**
**WO-A-83/02509**

(73) Proprietor: **Bull HN Information Systems Inc.**
**Corporation Trust Center 1209 Orange Street**
**Wilmington Delaware(US)**

(72) Inventor: **Holtey, Thomas O.**
**10 Crehore Dr.**
**Newton, MA 02162(US)**
Inventor: **Bruce, Kenneth E.**
**14 Terry St.**
**Nashua, NH 03060(US)**

(74) Representative: **Bardehle, Heinz, Dipl.-Ing. et al**
**Patent- und Rechtsanwälte Bardehle-Pagenberg-Dost-Altenburg & Partner**
**Galileiplatz 1 Postfach 86 06 20**
**W-8000 München 86(DE)**

Rank Xerox (UK) Business Services

**Description**

This invention relates generally to a computer display system, and more particularly to a display system for combining text and graphics in color.

Graphics and alphanumeric text are displayed usually in many business applications. This permits the display of characters or graphics either simultaneously or individually. In order to high-light and differentiate different graphs presented on one chart, it is desirable to present each graph and/or text in different colors.

Display systems are already known which utilize three bit map memories for storing the text in red, green and blue in the different bit map memories, as well as three bit map memories for storing graphics display. Accordingly, three character generators are normally required for generating text in the different colors. This has the disadvantage of requiring excessive hardware and thereby increasing the cost of the computer display system.

Another computer display system is known from PCT application WO 83/02509 to Honeywell Inc. There is provided an alphanumeric memory, a graphic memory and a color lookup memory. The alphanumeric data from the alphanumeric memory are accompanied by priority bits which determine whether the color lookup memory will be addressed for the alphanumeric data or the graphic data. The color signals stored at the addressed color lookup memory location represent varying intensities of a plurality of predetermined colors. The color signals are converted by a digital to analog converter into analog signals which are applied to the color CRT to control the color and intensity of each pixel as it is scanned.

It is an object of this invention to provide an improved computer display system with different hardware and involving a different method for displaying graphics and text in different colors.

SUMMARY OF THE INVENTION

The display system includes three bit map memories for storing pixels (bits) representative of a graphic display image. Each of the three bit map memories is utilized to display graphics in a particular color. Additional colors may be displayed utilizing the contents of each bit map memory, by combining the colors in each bit map memory.

Text information is stored in byte form in a data random access memory (RAM). Additionally, attribute characters are stored in an attribute RAM.

A mixing read-only memory (ROM) receives the pixels in the form of signals from each of the 3 bit map memories as well as the text signals from a data RAM coupled to a character generator. The character generator stores signals of characters that are utilized to generate the text bytes stored in the data RAM.

Attribute signals are also applied to the mixing ROM to provide for low or high intensity of the display or inverting the background of text and graphic color.

It is the purpose of the mixing PROM to receive color graphics signals, monochrome text signals and mode control signals to produce signals to represent pixels for presentation to a color CRT for the display of color graphics and color text either individually or intermixed on the same display CRT.

BRIEF DESCRIPTION OF THE DRAWINGS

The novel features which are characteristic of the invention are set forth with particularity in the appended claims. The invention itself, however, both as to organization and operation may best be understood by reference to the following description in conjunction with the drawings in which:

Figure 1 is a block diagram of the invention.

Figures 2A and 2B are logic block diagrams of the invention.

Figure 3 is a schematic diagram of the color mixing ROM.

DESCRIPTION OF THE PREFERRED EMBODIMENT

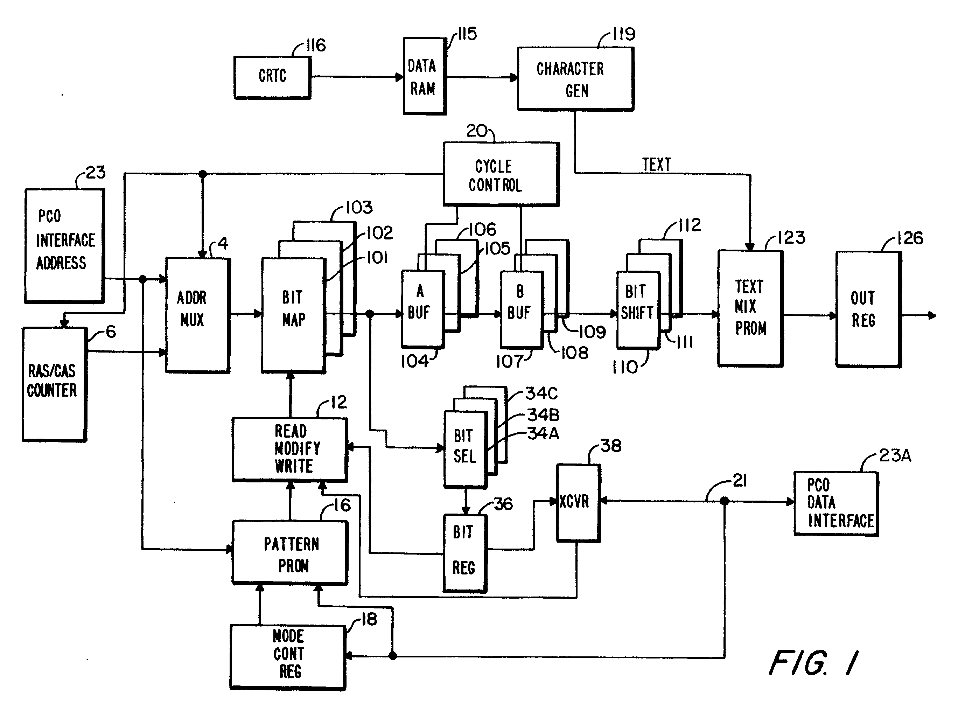

Referring now to Figure 1, there is shown a block diagram of the invention. Bit map memories 101, 102, 103 store images of the graphics to be displayed on the display screen. The image stored in bit map memory 101 will be displayed in red; the image stored in bit map memory 102 will be displayed in green; and the image stored in bit map memory 103 will be displayed in blue. Each bit map is a random access memory that contains the screen image of 216,000 pixels (720 x 300 pixels). Each location in each bit map represents a pixel to be displayed on the monitor in a predetermined color. The monochrome option requires a single plane memory, just one bit per pixel displayed. The color option requires 3 planes of memory, 101, 102, 103, a plane for each of the three basic colors -- red, green and blue. When writing to a color option memory, one or more planes at the addressed pixel position will be written to obtain the designated color. Black is displayed when all the corresponding pixels of three planes dual ZERO. A microprocessor (not shown) controls what is written into the actual bit map memory. Data is written one pixel per write command. Bit map memory 101, 102, 103 is addressed via an address multiplexer 4 from PCO interface address 23 or from row address select/column address select (RAS/CAS) 6. Each bit map memory is made up of 8 64K x 1 dynamic RAMS staring 216,000 pixels for display on a CRT (not shown). A pattern ROM 16 stores bits representative of the patterns that may be displayed; i.e., diagonal lines, cross-hatch lines, dotted areas, etc. A mode control register 18 stores mode signals which indicate a replace mode of operation, an OR mode of operation or an exclusive OR mode of operation. Predetermined output signals from pattern ROM 16 are selected in accordance with state of the mode signals from mode control register 18. Eight bits are read from bit map memory 101, 102, 103, and applied to bit select 34 which applies a bit selected from each of said bit map memories to bit map register 36. A transceiver 38 when enabled allows data bits from bit map register 36 to be reflected on data bus 21. Three low order address bits in a read command issued to the color option select which pixel appears in the return data byte. In the case of a write memory operation a full byte of data transferred from the PCO 23 is used to determine what is to be written into the address pixel position of bit map memory. The write command data byte utilizes bits 0, 1 and 2 for pattern select (the three high order bits of an eight word byte); bits 3 and 4 for operations reserved for future use; and bits 5, 6 and 7 for color select. In the color version of the graphics option, bit 5 will write into the red plane, bit 6 into the green plane and bit 7 into the blue plane. Therefore, by the use of these three bits eight colors can be generated.

The output signals of bit map memory 101, 102, 103 are buffered first in A buffers 104, 105, 106 and secondly in B buffers 107, 108, 109; then they are serialized in bit shift registers 110, 111, 112 and the stream of bits applied to text mix PROM 123.

Data RAM 115 stores text to be displayed on a CRT. The data is stored and read under control of CRTC 116. Text in the form of signals read from data RAM 115 are then applied to character generator 119. The output signal from character generator 119 is then applied to the text mix PROM 123.

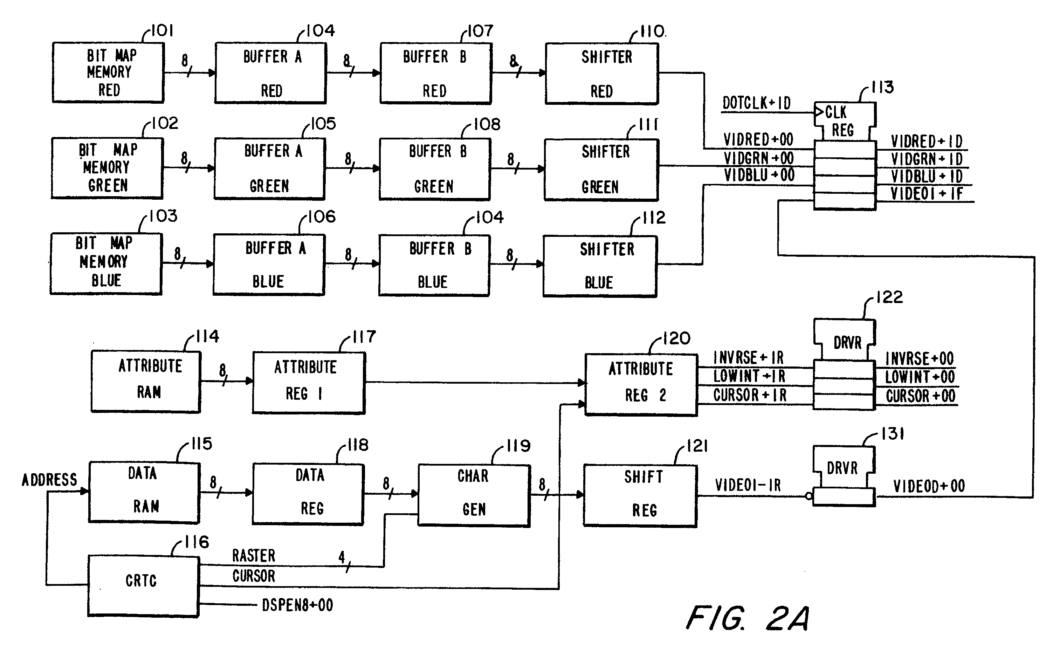

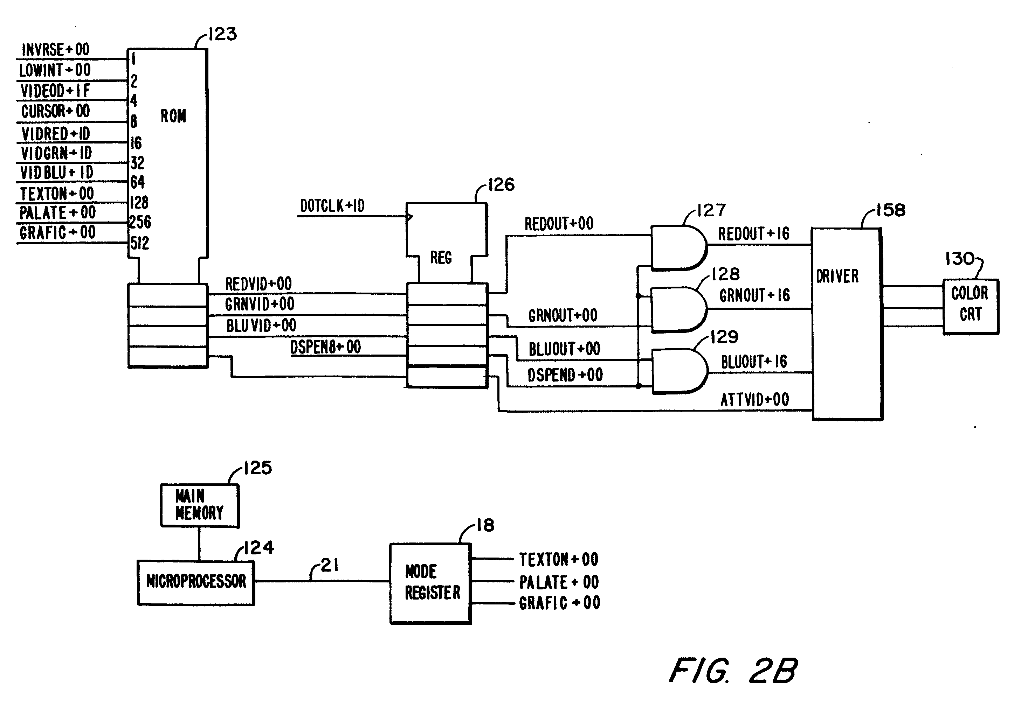

Referring now to Figures 2A and 2B, the text is generated in the normal monochrome display manner. The text display codes are in the data RAM 115 and the matching attributes; i.e., blinking, inverse, blanking, etc. are stored in attribute RAM 114. Both the attribute RAM and the data RAM 114, 115 respectively store 8 bit bytes. The cathode ray tube controller 116 controls the addressing of data RAM 115 by sending sequential addresses to the data RAM 115. The output of data RAM 115 is stored in data register 118. The output of the attribute RAM 114 is stored in attribute register 117. The output of data register 118 is applied to a character generator 119; the output being data bytes to the character generator 119. Four raster signals from cathode ray tube controller 116 are also applied to character generator 119 to address the horizontal lines of each character. The output of character generator 119 is applied to shift register 121. Register 121 is a serial shift register to serialize the text for CRT display. It has the same function as shift register 110, 111 and 112 for color.

The signal VIDE01-1R from shift register 121 is applied to driver 131, which inverts the video signal to VIDE0D + 00 and is then stored in register 113. There are three attribute signals from attribute register 120: INVRSE + 1R, LOWINT + 1R and CURSOR + 1R; these signals are applied to driver 122 which generates signals INVRSE + 00, LOWINT + 00 and CURSOR + 00.

In normal operation of the graphics option of the computer system, graphics information to be displayed on the screen is stored in bit map memories 101, 102 and 103. All of the dots which will appear as red are stored in bit map memory 101; all of the dots which appear as green will be stored in bit map memory 102; and all those dots which will appear as blue will be stored in bit map memory 103. By combining red, green and blue, several different colors can be generated in addition to the basic colors. The 8 bit outputs of the bit map memories 101, 102 and 103 are stored in their respective buffers -- buffer A104 for red, buffer A105 for green and buffer A106 for blue. These bytes are, in turn, transmitted to buffer B107 for red, buffer B108 for green and buffer B109 for blue. The data bytes are then applied to shifter 110 for red, shifter 111 for green and shifter 112 for blue; these shifters generate their respective color signals VIDRED + 00, VIDGRN + 00 and VIDBLU + 00 which are then stored in register 113 on the rise of the dot clock signal, DOTCLK + 1D. The color output signals VIDRED + 1D, VIDGRN + 1D and VIDBLU + 1D from register 113 are then applied to input address terminals of a read-only memory 123. In addition, the inverse signal INVRSE + 00, the low intensity signal LOWINT + 00 and video signal VIDEOD + 1F are also applied to the input address terminals of ROM 123. Also applied to the input address terminals of ROM 123 is the text-on signal TEXTON + 00, the palate signal PALATE + 00 and the graphics signal GRAFIC + 00 which are received from mode register 18 which is loaded via a data bus 21 from main memory 125 under control of the microprocessor 124. The text-on signal TEXTON when high, allows the text received to be displayed on the color CRT 130. The palate signal PALATE+00 selects one of two colors for that text and the graphics signal GRAFIC+1D activates the graphics for display on the color CRT 130. The out signals of ROM 123, REDVID+00, GRNVID+00 and BLUVID+00 are then stored in register 126 on the rise of the dot clock signal DOTCLK+1D. The output signals from register 126 REDOUT+00, GRNOUT+00 and BLUOUT+00 are further gated through their respective AND gates 127, 128, 129 when the display enable DSPEND+00 signal is high. The color output signals from AND gates 127, 128, 129, respectively, are REDOUT+1G, GRNOUT+1G and BLUOUT+1G are then displayed on the screen of the color CRT 130. The display enable signal DSPEN8+00 which is generated by the CRTC 116 for a horizontal display time of the beam across the face of the CRT 130 is also stored in register 126 to generate the display enable signal DSPEND+00.

ROM 123 also generates an attribute video signal ATTVID+00. ATTVID+00 represents the high intensity attribute of the text from ROM 123.

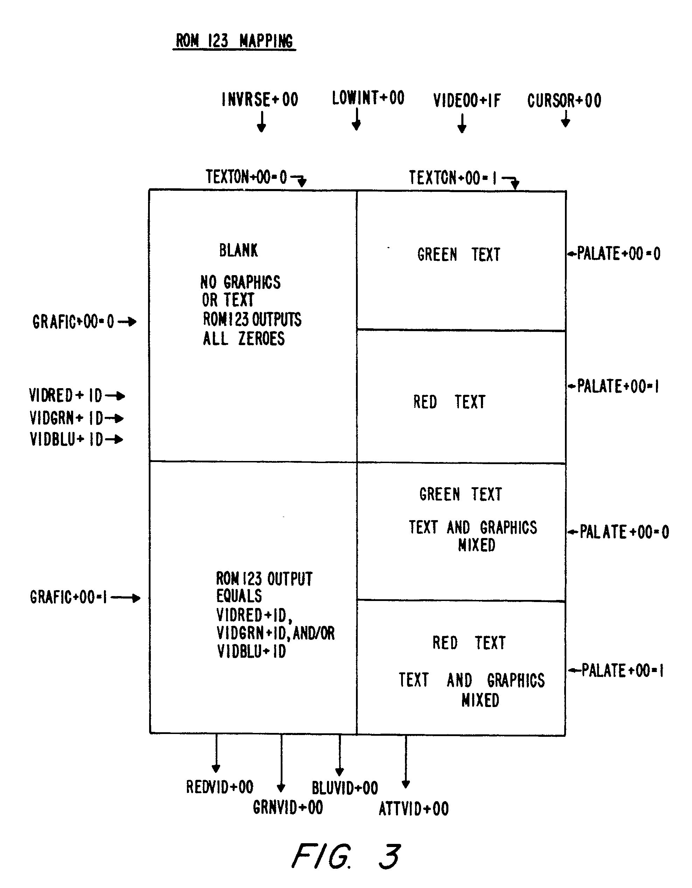

Referring now to ROM 123 of Figures 2B and 3, when certain address signals applied to ROM 123 are true, the effect of mixing color graphics with monochrome text produces color text which may or may not be mixed with the graphics display. The TEXTON signal selects the text portion of ROM 123; whereas the GRAFIC signal selects the graphics portion. Hence as shown in Figure 3, when TEXTON signal is ZERO and GRAFICS signal is ZERO, there is no graphics or text displayed. When TEXTON is ONE and GRAFICS is ZERO, either red or green text can be displayed. The selection is done by the PALATE signal. When PALATE is ZERO and TEXTON is ONE, with GRAFICS equal to ZERO, green text will be displayed. In a similar manner with the above signals set the same, but with PALATE equal to ONE, red text will be displayed.

Text and graphics can further be mixed and presented in selected colors. For example, if the TEXTON signal is ONE and the GRAFICS signal is ONE, green or red text and graphics can be selected depending on whether PALATE is ZERO or ONE. When PALATE is ZERO the text is green and when the PALATE is ONE the text is red with graphics independent of the PALATE signal and being a color represented by the truth table below.

Colors can be mixed by having different combinations of VIDRED, VIDGRN, VIDBLU along with the other signals. Graphics can, therefore, be presented in 8 colors; whereas text can be presented in 2 colors. Each text color may appear as a high intensity or low intensity color.

The following truth table indicates how the 8 colors for graphics are selected for display in response to various signals applied to ROM 123, whereon ONE represents that the signal is true and ZERO represents that the signal is false.

| **VIDRED** | **VIDGRN** | **VIDBLU** | **RESULTANT COLOR** |
|:---:|:---:|:---:|:---:|
| 0 | 0 | 0 | Black |
| 0 | 0 | 1 | Blue |
| 0 | 1 | 0 | Green |
| 0 | 1 | 1 | Cyan |
| 1 | 0 | 0 | Red |
| 1 | 0 | 1 | Magenta |
| 1 | 1 | 0 | Yellow |
| 1 | 1 | 1 | White |

## Claims

1. Computer display system for producing color text and graphics comprising first storage means for storing graphic pixels (bits) and character generator means for generating text signals, characterized in that the said graphic pixels are representative of graphic display images, each image being identical and in a predetermined different color, and the said text signals are representative of alphanumeric text in monochrome color, said display system being further characterized by

- a second storage means (123) coupled to said first storage means (101, 102, 103) and said character generator means (119) and being responsive to the said graphic pixels and the said text signals in addressing the said second storage means (123) for generating color-mixed signals for presentation on a color CRT for the display of color graphics and color text either individually or intermixed on the same display CRT, and
- a mode control means (18) for generating display enabling signals, which mode control means is also coupled to the said second storage means (123) in performing an addressing function and is provided for converting monochrome text to color text within the said second storage means (123) and for enabling individual or combined display of text and graphics.

2. Computer display system as recited in claim 1, characterized in that said second storage means (123) is divided into areas, with some predetermined areas storing signals representative of text in color, other predetermined areas storing signals representative of graphics in color, and still other predetermined areas storing signals representative of color text and graphics mixed.

3. Computer display system as recited in claim 2, characterized in that said second storage means (123) is responsive to different color signals (VIDRED, VIDGRN, VIDBLU) for displaying on said CRT the said different colors (red, green, blue).

4. Computer display system as recited in claim 3, characterized in that a predetermined color is generated when a predetermined combination of the said color signals (VIDRED, VIDGRN, VIDBLU) are true in accordance with the following truth table wherein "1" indicates the signal is true:

| VIDRED | VIDGRN | VIDBLU | Resultant color |
|--------|--------|--------|-----------------|
| 0 | 0 | 0 | Black |
| 0 | 0 | 1 | Blue |
| 0 | 1 | 0 | Green |
| 0 | 1 | 1 | Cyan |
| 1 | 0 | 0 | Red |
| 1 | 0 | 1 | Magenta |
| 1 | 1 | 0 | Yellow |
| 1 | 1 | 1 | White. |

5. Computer display system as recited in any one of the preceding claims, characterized by attribute signal generating means (114, 117, 120) coupled to said second storage means (123) for generating attribute signals (INVRSE, LOWINT, CURSOR) for presentation on said color CRT.

6. A method of mixing first signals representative of graphic display images in different colors with second signals representative of alphanumeric text in monochrome by feeding both of said signals to the address inputs of a ROM, said method comprising the steps of:
   (a) dividing said ROM (123) into areas;
   (b) storing signals representative of text of predetermined colors in predetermined first areas;
   (c) storing signals representative of graphics in predetermined colors in second predetermined areas; and
   (d) selecting the areas storing the text or graphics with the desired colors.

7. The method as recited in claim 6, wherein a VIDRED-signal selects, when true, signals representative of red graphics, a VIDGRN-signal selects, when true, signals representative of green graphics, and a VIDBLU-signal selects, when true, signals representative of blue graphics.

8. The method as recited in claim 7, wherein a predetermined color is generated when a predetermined combination of VIDRED, VIDGRN, VIDBLU signals are true in accordance to the following truth table wherein "1" indicates the signal is true:

| VIDRED | VIDGRN | VIDBLU | Resultant color |
|--------|--------|--------|-----------------|
| 0 | 0 | 0 | Black |
| 0 | 0 | 1 | Blue |
| 0 | 1 | 0 | Green |
| 0 | 1 | 1 | Cyan |
| 1 | 0 | 0 | Red |
| 1 | 0 | 1 | Magenta |
| 1 | 1 | 0 | Yellow |
| 1 | 1 | 1 | White. |

## Revendications

1. Système d'affichage commandé par calculateur pour l'affichage de textes et graphiques en couleur comprenant des premiers moyens d'enregistrement pour enregistrer les pixels (bits) graphiques et des moyens générateurs de caractères pour générer des signaux de texte, caractérisé en ce que lesdits pixels graphiques sont représentatifs des images d'affichage graphique, chaque image étant identique et dans une couleur différente prédéterminée, et lesdits signaux de texte sont représentatifs du texte alphanumérique en couleur monochrome, ledit système d'affichage étant de plus caractérisé par
   - de seconds moyens d'enregistrement ( 123) couplés auxdits premiers moyens d'enregistrement (101, 102, 103) et auxdits moyens générateurs de caractères (119) et étant sensibles auxdits pixels graphiques et auxdits signaux de texte en adressant lesdits seconds moyens d'enregistrement (123) pour générer des signaux mixés en couleur pour présentation sur un CRT couleur destinée à l'affichage de graphiques couleur et de textes couleur soit séparément soit mélangés les uns aux autres sur le même CRT d'affichage, et
   - des moyens de contrôle de mode (18) pour générer des signaux d'autorisation d'affichage, lesquels moyens de contrôle de mode sont aussi couplés auxdits seconds moyens d'enregistrement (123) en effectuant une fonction d'adressage et sont prévus pour convertir le texte monochrome en texte couleur dans lesdits seconds moyens d'enregistrement (123) et pour permettre l'affichage séparé ou combiné du texte et des graphiques.

2. Système d'affichage commandé par calculateur selon la revendication 1, caractérisé en ce que lesdits seconds moyens d'enregistrement (123) sont divisés en domaines, avec certains domaines prédéterminés enregistrant des signaux représentatifs du texte en couleur, d'autres domaines prédéterminés enregistrant des signaux représentatifs des graphiques en couleur, et encore d'autres domaines prédéterminés enregistrant des signaux représentatifs du texte et des graphiques en couleur mélangés.

3. Système d'affichage conmandé par calculateur selon la revendication 2, caractérisé en ce que lesdits seconds moyens d'enregistrement (123) sont sensibles aux différents signaux de couleur (VIDRED, VIDGRN, VIDBLU) pour affichage sur ledit CRT desdits différentes couleurs (rouge, vert, bleu).

4. Système d'affichage commandé par calculateur selon la revendication 3, caractérisé en ce qu'une couleur prédéterminée est générée quand une combinaison prédéterminée desdits signaux de couleur (VIDRED, VIDGRN, VIDBLU) est vraie selon la table de vérité suivante dans laquelle "1" indique que le signal est vrai :

| VIDRED | VIDGRN | VIDBLU | COULEUR RESULTANTE |
|--------|--------|--------|--------------------|
| 0 | 0 | 0 | Noir |
| 0 | 0 | 1 | Bleu |
| 0 | 1 | 0 | Vert |
| 0 | 1 | 1 | Cyan |
| 1 | 0 | 0 | Rouge |
| 1 | 0 | 1 | Magenta |
| 1 | 1 | 0 | Jaune |
| 1 | 1 | 1 | Blanc |

5. Système d'affichage commandé par calculateur selon l'une quelconque des revendications précédentes, caractérisé par des moyens de génération de signaux d'adaptation (114,117,120) couplés auxdits seconds moyens d'enregistrement (123) pour générer des signaux d'adaptation (INVRSE, LOWINT, CURSOR) destinés à une présentation sur ledit CRT couleur.

6. Procédé de mixage des premiers signaux représentatifs des images d'affichage graphique en différentes couleurs avec des seconds signaux représentatifs de textes alphanumériques en monochrome en alimentant avec les deux dits signaux les entrées d'adresses d'une ROM, ledit procédé comprenant les étapes de :
   (a) diviser ladite ROM (123) en domaines ;
   (b) enregistrer des signaux représentatifs des textes de couleurs prédéterminées dans des premiers doamines prédétermines ;
   (c) enregistrer des signaux représentatifs des graphiques de couleurs prédéterminées dans des seconds domaines prédétermines ; et
   (d) sélectionner les domaines d'enregistrement des textes ou des graphiques avec les couleurs souhaitées.

7. Procédé selon la revendication 6, dans lequel un signal - VIDRED sélectionne s'il est vrai, des signaux représentatifs des graphiques rouges, un signal - VIDGRN sélectionne, s'il est vrai, des signaux représentatifs des graphiques verts, et un signal -VIDBLU sélectionne, s'il est vrai, des signaux représentatifs des graphiques bleus.

8. Procédé selon la revendication 7, dans lequel une couleur prédéterminée est générée quand une combinaison des signaux VIDRED, VIDGRN, VIDBLU est vraie selon la table de vérité suivante dans laquelle "1" indique que le signal est vrai.

| VIDRED | VIDGRN | VIDBLU | COULEUR RESULTANTE |
|--------|--------|--------|--------------------|
| 0 | 0 | 0 | Noir |
| 0 | 0 | 1 | Bleu |
| 0 | 1 | 0 | Vert |
| 0 | 1 | 1 | Cyan |
| 1 | 0 | 0 | Rouge |
| 1 | 0 | 1 | Magenta |
| 1 | 1 | 0 | Jaune |
| 1 | 1 | 1 | Blanc |

7

**Ansprüche**

1. Computer-Anzeige-System zum Erzeugen farbigen Textes und farbiger Graphik mit einer ersten Speichereinrichtung zum Speichern graphischer Pixel (Bits) und einer Zeichengeneratoreinrichtung zum Erzeugen von Textsignalen,
dadurch gekennzeichnet, daß
die graphischen Pixel graphische Anzeigebilder darstellen, wobei jedes Bild identisch und in einer vorbestimmten unterschiedlichen Farbe ist, und daß die Textsignale einen alphanumerischen Text einfarbig darstellen, wobei das Anzeige-System weiterhin gekennzeichnet ist durch
   - eine zweite Speichereinrichtung (123), die mit der ersten Speichereinrichtung (101, 102, 103) und der Zeichengeneratoreinrichtung (119) gekoppelt ist, und die auch auf die graphischen Pixel und die Textsignale nur durch ein Adressieren der zweiten Speichereinrichtung (123) anspricht zum Erzeugen gemischtfarbiger Signale für eine Darstellung auf einer Farb-CRT für die Anzeige farbiger Schriftzeichen und eines farbigen Textes entweder einzeln oder gemischt auf der gleichen Anzeige-CRT und,
   - eine Modem-Steuerungseinrichtung (18) zum Erzeugen einer Anzeige, die Signale ermöglicht, wobei die Modem-Steuerungseinrichtung auch mit der zweiten Speichereinrichtung (123) gekoppelt ist beim Durchführen einer Adressierungsfunktion und vorgesehen ist zum Umwandeln eines einfarbigen Textes in einen farbigen Text in der zweiten Speichereinrichtung (123) und zum Ermöglichen einer einzelnen oder kombinierten Anzeige von Text und Schriftzeichen.

2. Computer-Anzeige-System nach Anspruch 1, dadurch gekennzeichnet, daß die zweite Speichereinrichtung (123) in Bereiche eingeteilt ist, mit einigen vorbestimmten Bereichen, die Signale speichern, die einen Text in Farbe darstellen, anderen vorbestimmten Bereichen, die Signale speichern, die Schriftzeichen in Farbe darstellen, und weiterhin anderen vorbestimmten Bereichen, die Signale speichern, die einen farbigen Text und Schriftzeichen gemischt darstellen.

3. Computer-Anzeige-System nach Anspruch 2, dadurch gekennzeichnet, daß die zweite Speichereinrichtung (123) auf verschiedene Farbsignale (VIDRED, VIDGRN, VIDBLU) anspricht zum Anzeigen der verschiedenen Farben (rot, grün, blau) auf der CRT.

4. Computer-Anzeige-System nach Anspruch 3, dadurch gekennzeichnet, daß eine vorbestimmte Farbe erzeugt wird, wenn eine vorbestimmte Kombination der Farbsignale (VIDRED, VIDGRN, VIDBLU) richtig ist in Übereinstimmung mit der folgenden Wahrheitstabelle, wobei "1" anzeigt, daß das Signal richtig ist:

| VIDRED | VIDGRN | VIDBLU | Resultierende Farbe |
|--------|--------|--------|---------------------|
| 0 | 0 | 0 | Schwarz |
| 0 | 0 | 1 | Blau |
| 0 | 1 | 0 | Grün |
| 0 | 1 | 1 | Cyan |
| 1 | 0 | 0 | Rot |
| 1 | 0 | 1 | Magenta |
| 1 | 1 | 0 | Gelb |
| 1 | 1 | 1 | Weiß |

5. Computer-Anzeige-System nach einem der vorangehenden Ansprüche, gekennzeichnet durch eine Zusatzsignal-Erzeugungseinrichtung (114, 117,120), die mit der zweiten Speichereinrichtung (123) gekoppelt ist zum Erzeugen von Zusatzsignalen (INVRSE, LOWINT, CURSOR) für eine Darstellung auf der Farb-CRT.

6. Verfahren zum Mischen erster Signale, die graphische Anzeigebilder in verschiedenen Farben darstellen, mit zweiten Signalen, die einen alphanumerischen Text einfarbig darstellen, durch Zuführen beider Signale zu den Adreßeingängen eines ROMs, wobei das Verfahren die Schritte aufweist:

(a) Aufteilen des ROMs (123) in Bereiche;

(b) Speichern von Signalen, die einen Text vorbestimmter Farben in vorbestimmten ersten Bereichen darstellen;

(c) Speichern von Signalen, die Schriftzeichen in vorbestimmten Farben in zweiten vorbestimmten Bereichen darstellen; und

(d) Auswählen der Bereiche, die den Text oder die Schriftzeichen mit den erwünschten Farben speichern.

7. Verfahren nach Anspruch 6, wobei ein VIDRED-Signal, wenn es richtig ist, Signale auswählt, die rote Schriftzeichen darstellen, ein VIDGRN-Signal, wenn es richtig ist, Signale auswählt, die grüne Schriftzeichen darstellen, und ein VIDBLU-Signal, wenn es richtig ist, Signale auswählt, die blaue Schriftzeichen darstellen.

8. Verfahren nach Anspruch 7, wobei eine vorbestimmte Farbe erzeugt wird, wenn eine vorbestimmte Kombination der VIDRED-, VIDGRN-, VIDBLU-Signale richtig ist, in Übereinstimmung mit der folgenden Wahrheitstabelle, wobei "1" anzeigt, daß das Signal richtig ist:

| VIDRED | VIDGRN | VIDBLU | Resultierende Farbe |
|--------|--------|--------|---------------------|
| 0 | 0 | 0 | Schwarz |
| 0 | 0 | 1 | Blau |
| 0 | 1 | 0 | Grün |
| 0 | 1 | 1 | Cyan |
| 1 | 0 | 0 | Rot |
| 1 | 0 | 1 | Magenta |
| 1 | 1 | 0 | Gelb |
| 1 | 1 | 1 | Weiß |

FIG. 1

FIG. 2A

FIG. 2B

130 — COLOR CRT

158 — DRIVER

127 — REDOUT+16
128 — GRNOUT+16
129 — BLUOUT+16
ATTVID+00

REDOUT+00
GRNOUT+00
BLUOUT+00
DSPEND+00

126 — REG

DOTCLK+1D

REDVID+00
GRNVID+00
BLUVID+00
DSPEN8+00

123 — ROM
1
2
4
8
16
32
64
128
256
512

INVRSE+00
LOWINT+00
VIDEOD+1F
CURSOR+00
VIDRED+1D
VIDGRN+1D
VIDBLU+1D
TEXTON+00
PALATE+00
GRAFIC+00

18 — MODE REGISTER
TEXTON+00
PALATE+00
GRAFIC+00

21

125 — MAIN MEMORY
124 — MICROPROCESSOR

12

ROM 123 MAPPING

INVRSE+00    LOWINT+00    VIDEOO+IF    CURSOR+00

TEXTON+00=0        TEXTCN+00=1

GRAFIC+00=0 →

**BLANK**

**NO GRAPHICS
OR TEXT
ROM123 OUTPUTS
ALL ZEROES**

**GREEN TEXT** ←PALATE+00=0

**RED TEXT** ←PALATE+00=1

VIDRED + ID →
VIDGRN+ ID →
VIDBLU+ ID →

GRAFIC+00=1 →

**ROM 123 OUTPUT
EQUALS
VIDRED+ID,
VIDGRN+ID,AND/OR
VIDBLU+ID**

**GREEN TEXT**

**TEXT AND GRAPHICS
MIXED** ←PALATE+00=0

**RED TEXT**

**TEXT AND GRAPHICS
MIXED** ←PALATE+00=1

REDVID+00    BLUVID+00

GRNVID+00    ATTVID+00

*FIG. 3*